# EUROPEAN PATENT APPLICATION

(11) **EP 3 964 382 A1**
(43) Date of publication of application: **09.03.2022**
(21) Application number: 20194786.8
(22) Date of filing: 07.09.2020
(51) Int. Cl.: B60L 5/24, B60L 5/26, B60L 5/28

(54) **PANTOGRAPH SYSTEM AND METHOD FOR USING A PANTOGRAPH SYSTEM**

(71) Applicant: VR-Yhtymä Oy, 00240 Helsinki (FI)
(72) Inventor: Kojo, Markku, 00240 Helsinki (FI)
(74) Representative: Kolster Oy Ab

(57) **Abstract**

In the presented solution a pantograph system comprises a sliding element (1) and an arm assembly (3) to be arranged between an electric vehicle and the sliding element (1). The system also comprises a primary actuator (6) arranged to act on the arm assembly (3) to lift the sliding element (1) from a low position of the sliding element (1) to a position where the sliding element (1) is in contact with an overhead line (2). Furthermore, the system comprises an auxiliary actuator (7) arranged to act on the arm assembly (3) to lift the sliding element (1) from the low position upwards.

## Description

### FIELD OF THE INVENTION

The present invention relates to a pantograph system and to a method for using a pantograph system.

Pantographs are used in connection with electric vehicles such as electric trains, trams, and trolleybuses. The pantograph connects the electric vehicle to an overhead line. It is important that the connection between the vehicle and the overhead line is reliable.

### BRIEF DESCRIPTION

An object of the present invention to provide a new pantograph system and method for using a pantograph system. The pantograph system and the method are characterized by what is stated in the independent claims. Some embodiments are disclosed in the dependent claims.

In the presented solution a pantograph system comprises a sliding element and an arm assembly to be arranged between an electric vehicle and the sliding element. The system also comprises a primary actuator arranged to act on the arm assembly to lift the sliding element from a low position of the sliding element to a position where the sliding element is in contact with an overhead line. Furthermore, the system comprises an auxiliary actuator arranged to act on the arm assembly to lift the sliding element from the low position upwards. When snow and ice, for example, gathers on the sliding element and the pantograph structure the primary actuator alone may not be able to lift the sliding element. By using the auxiliary actuator together with the primary actuator an initial lifting may be performed such that the sliding element is lifted from the low position and a contact between the sliding element and the overhead line is achieved. The auxiliary actuator or the auxiliary actuator together with the primary actuator cause a higher lifting force on the sliding element than the primary actuator alone.

According to an embodiment the auxiliary actuator is arranged to act on the arm assembly to lift the sliding element from the low position only to a position that is lower than the position where the sliding element is in contact with the overhead line. Thereby the initial lifting may be performed by using a higher force, but the sliding element is not pushed against the overhead line using a force that would be too strong. The initial lifting is limited to a certain distance from the overhead line to avoid arcing between the pantograph and the overhead line. The auxiliary actuator may be dimensioned to provide a lifting force that is about three to four times higher than the lifting force of the primary actuator, for example.

According to an embodiment the arm assembly comprises a base assembly, a lower arm pivotally connected to the base assembly, and an upper arm pivotally connected to the lower arm. In connection with such a structure the auxiliary actuator may be arranged to act on the lower arm. Such a solution is simple and reliable.

According to an embodiment the auxiliary actuator is arranged to touch the lower arm when lifting the sliding element but arranged to separate from the lower arm when the primary actuator lifts the sliding element to the position where the sliding element is in contact with the overhead line. Thereby the auxiliary actuator efficiently lifts the sliding element during the initial phase of the lifting but is also efficiently prevented from pushing the sliding element against the overhead line.

According to an embodiment the auxiliary actuator is arranged to control the sliding element up and down for shaking the sliding element. Shaking of the sliding element may be used for detaching snow and ice from the sliding element thereby increasing the reliability of the connection between the sliding element and the overhead line.

According to an embodiment the auxiliary actuator is a pneumatic or a hydraulic actuator. A pneumatic or a hydraulic actuator is simple and reliable in use.

According to an embodiment the system comprises an assembly to control the primary actuator to act on the arm assembly by a normal force in a normal force mode and, if needed, by a higher force in a higher force mode. The higher force mode helps in lifting the sliding element and enhances reliable contact between the sliding element and the overhead line.

According to an embodiment the primary actuator is a pneumatic or a hydraulic actuator and in normal force mode the assembly to control the primary actuator is arranged to guide a lower pressure to the primary actuator and in higher force mode the assembly to control the primary actuator is arranged to guide a higher pressure to the primary actuator. A pneumatic or hydraulic system is simple and easy to implement reliably.

According to an embodiment the system comprises control means to control the vehicle to run in higher force mode at a speed that is lower than a maximum speed in the normal force mode. The pantograph system may be designed such that aerodynamic forces tend to increase the force lifting the sliding element as the speed of the vehicle increases. Thus, the faster the vehicle runs the higher is the force that pushes the sliding element against the overhead line. In this embodiment the vehicle is prevented from running too fast such that the sliding element is not pushed against the overhead line excessively. It is also possible to instruct the driver to run the vehicle slower than a certain speed when using the higher force mode.

### BRIEF DESCRIPTION OF THE DRAWINGS

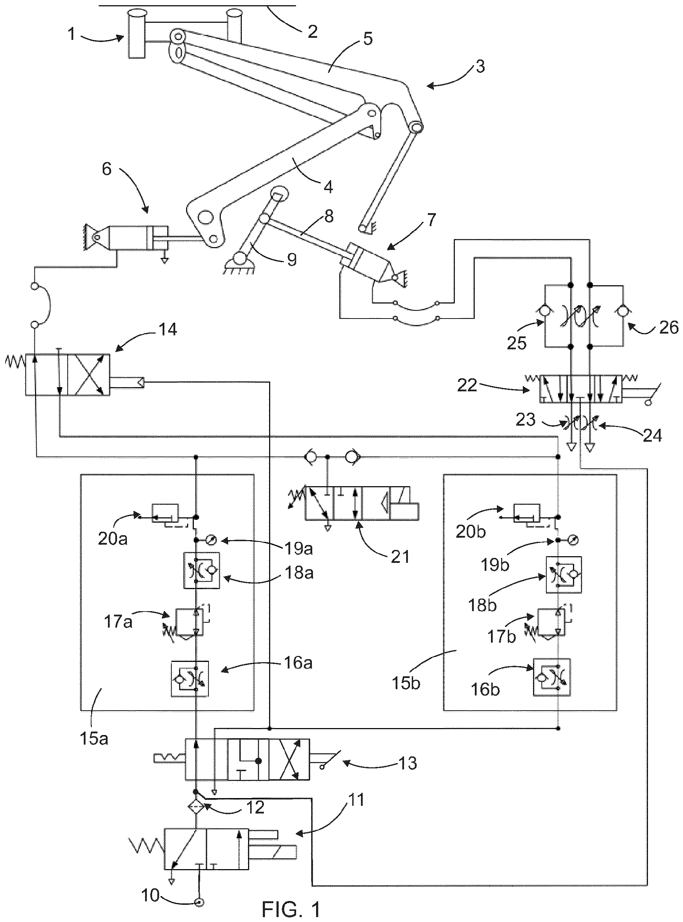

In the following the invention will be described in greater detail by means of preferred embodiments with reference to the attached drawings, in which
Figure 1 shows schematically a pantograph system and a control circuit thereof.

### DETAILED DESCRIPTION

Figure 1 shows a pantograph system. The pantograph system comprises a sliding element 1. The sliding element 1 comprises two collector bows having contact surfaces. The contact surfaces may comprise carbon electrodes or copper, for example. During operation mode of an electric vehicle the contact surfaces touch an overhead line 2. The overhead line 2 feeds electricity to the electric vehicle via the pantograph system. The voltage of the overhead line 2 may be 5 to 30 kV, AC or 2 to 10 kV, DC, for example.

The sliding element 1 also comprises a collector sledge or body. The sliding element 1 is pivotally connected from the collector sledge to an arm assembly 3. The arm assembly 3 comprises a base assembly, a lower arm 4 pivotally connected to the base assembly, and an upper arm 5 pivotally connected to the lower arm 4. The upper arm 5 is pivotally connected to the collector sledge. The arm assembly 3 also comprises guide bars guiding the movement of the arm assembly 3.

The base assembly is connected to the electric vehicle by insulators. The electric vehicle may be an electric rail vehicle such as an electric train or tram. The electric vehicle may also be a trolleybus or any other electric vehicle that may be connected to an overhead line by a pantograph system. For the sake of clarity, the base assembly, the insulators, and the electric vehicle are not shown in Figure 1.

The pantograph system also comprises a primary actuator 6. The primary actuator 6 is arranged to act on the arm assembly 3 to lift the sliding element 1 from a low position of the sliding element 1 to a position where the sliding element 1 is in contact with an overhead line 2. The primary actuator 6 may be a single-acting cylinder or a double-acting cylinder or a bellows, for example. The primary actuator 6 may be pneumatic as shown in Figure 1. The primary actuator 6 may also be hydraulic or electric.

Furthermore, the pantograph system comprises an auxiliary actuator 7 or a supplementary actuator. The auxiliary actuator 7 is arranged to act on the arm assembly 3 to lift the sliding element 1 from the low position upwards. A piston rod 8 of the auxiliary actuator is connected to a pivotally connected lever 9. The auxiliary actuator 7 turns the lever 9. When the sliding element 1 is in the low position the upper end of the lever 9 touches the lower side of the lower arm 4. Thus, when the auxiliary actuator 7 turns the lever 9, the lever 9 acts on the lower arm 4 such that the sliding element 1 is lifted.

The auxiliary actuator 7, the piston rod 8 of the auxiliary actuator 7, and the lever 9 are dimensioned such that when the primary actuator 6 further raises the sliding element 1, the end of the lever 9 does not touch the lower arm 4 anymore, as shown in Figure 1. Thus, when the primary actuator further raises the sliding element 1 it separates the lever 9 from the lower arm 4. Thus, the auxiliary actuator 7 participates in the lifting of the sliding element 1 during the initial lifting phase, only. This feature may be achieved by not separating the lever 9 or a corresponding part in connection with the auxiliary actuator 7 from the lower arm 4 but by connecting the end of the lever 9 or corresponding part to the arm assembly by a slide connection, for example.

The auxiliary actuator 7 may be a single-acting cylinder or a double-acting cylinder or a bellows, for example. The auxiliary actuator 7 may be pneumatic as shown in Figure 1. The auxiliary actuator 7 may also be hydraulic or electric.

The lower part of Figure 1 shows an example how the primary actuator 6 and the auxiliary actuator 7 may be controlled. Reference numeral 10 depicts an air supply of the electric vehicle. Typically, pressurized air having a pressure from 6 to 10 bar may be available.

By the magnet valve 11 the lifting action of the sliding element 1 is controlled on and off. After the magnet valve 11 there is an air filter 12.

By a selector valve 13 it is selected whether the primary actuator 6 is controlled in normal force mode or in higher force mode or that a shaking mode is used. Selection made by the selector valve 13 also affects on the valve 14 as shown in the diagram in Figure 1.

In the situation shown in Figure 1 the primary actuator 6 is controlled in normal force mode. In that case the pressurized air is guided to the primary actuator 6 using the components in the valve block normal force mode 15a.

The components in the valve block normal force mode 15a may comprise a first choke valve 16a, a precision regulator 17a, a second choke valve 18a, a pressure indicator 19a, and a safety valve 20a. The first choke valve 16a controls the lifting speed of the primary actuator 6. The second choke valve 18a controls the lowering speed of the primary actuator 6. The precision regulator 17a regulates the pressure fed to the primary actuator 6 to an adequate level. The pressure fed to the primary actuator 6 in the normal force mode may be 3 to 6 bar, for example. In such case the sliding element 1 is pushed against the overhead line 2 with a force that may be from 70 to 100 N, for example. The pressure indicator 19a shows the pressure that is fed to the primary actuator 6. The safety valve 20a takes care that the pressure is never too high.

If snow or ice gathers on the sliding element 1 and the pantograph structure it may happen that in normal force mode the lifting of the sliding element 1 fails and/or the contact between the sliding element 1 and the overhead line 2 is poor. Undercooled water may also cause a poor contact between the sliding element 1 and the overhead line 2. In such cases a higher force mode may be selected by the selector valve 13. In such case the selector valve 13 is guided to a position that is opposite to the position shown in Figure 1. The selector valve 13 may be controlled manually or by a control command from a control unit.

In higher force mode the pressurized air is guided to the primary actuator 6 using the components in the valve block higher force mode 15b. The components 16b to 20b in the valve block higher force mode 15b may substantially correspond to the components 16a to 20a in the valve block normal force mode 15a.

However, the precision regulator 17b in the valve block higher force mode 15b regulates the pressure fed to the primary actuator 6 to a level that is higher than the pressure fed to the primary actuator 6 in normal force mode. The pressure fed to the primary actuator 6 in the higher force mode may be 4 to 9 bar, for example. In such case the sliding element 1 is pushed against the overhead line 2 with a force that may be from 100 to 150 N, for example.

The electric vehicle may comprise a control unit that may receive information from the pantograph system. The control unit may also control the functions of the pantograph unit. However, for the sake of clarity the control unit and its connections are not shown in Figure 1. In higher force mode the control unit may receive the information that the higher force mode is in use. The control unit may control the vehicle to run in the higher force mode at a speed that is lower than a maximum speed in the normal force mode to prevent excessive force from the sliding element 1 against the overhead line. It is also possible to instruct the driver to run the vehicle slower than a certain speed when using the higher force mode.

Figure 1 also shows a fast lowering valve 21. The fast lowering valve 21 receives a control signal from a pressure switch, for example, if there is a fault in the system such as damage of the carbon contact elements of the sliding element.

The auxiliary actuator 7 is controlled to lift and lower the sliding element 1 by using a selector valve 22. In the embodiment shown in Figure 1 the auxiliary actuator 7 is controlled independently of the control of the primary actuator 6. Thus, the position and guiding of the selector valve 13 does not affect on the control of the auxiliary actuator 7. Thus, the primary actuator 6 and the auxiliary actuator 7 may control the lifting and lowering of the sliding element 1 simultaneously or separately.

According to an embodiment, for shaking the sliding element 1 the choke valves 23, 24, 25, and 26 are dimensioned to allow a higher lifting speed and a higher lowering speed for the sliding element 1 than the choke valves 16a, 16b, 18a, and 18b determining the lifting speed and lowering speed of the sliding element 1 performed by the primary actuator 6. Thereby shaking the sliding element 1 may be performed by controlling the selector valve 22 to make the auxiliary actuator 7 to oscillate for raising and lowering the sliding element 1. The selector valve 22 may be controlled by the control system or manually.

Especially when the auxiliary actuator 7 controls the sliding element up and down for shaking the sliding element 1 it is beneficial that the primary actuator 6 does not take part in lifting and lowering of the sliding element 1. According to an embodiment, this may be achieved by choosing the shaking mode with the selector valve 13. The shaking mode is chosen by the selector valve 13 by guiding the selector valve 13 to a middle position shown in Figure 1. When the shaking mode is chosen by the selector valve 13 no pressurized air is fed to the primary actuator 6. Thus, only the primary actuator 7 raises and lowers the sliding element 1.

According to an embodiment the pantograph system does not comprise the higher force mode i.e. the components and connections used for performing the higher force mode but comprises the auxiliary actuator 7 and the components and connections relating to the auxiliary actuator 7. According to an embodiment the pantograph system comprises the normal force mode and the higher speed mode but does not comprise the auxiliary actuator 7 and the components and connections relating to the auxiliary actuator 7.

It will be obvious to a person skilled in the art that, as technology advances, the inventive concept can be implemented in various ways. The invention and its embodiments are not limited to the examples described above but may vary within the scope of the claims.

## Claims

1. A pantograph system comprising
a sliding element,
an arm assembly to be arranged between an electric vehicle and the sliding element,
a primary actuator arranged to act on the arm assembly to lift the sliding element from a low position of the sliding element to a position where the sliding element is in contact with an overhead line, and
an auxiliary actuator arranged to act on the arm assembly to lift the sliding element from the low position upwards.

2. A pantograph system as claimed in claim 1, wherein the auxiliary actuator is arranged to act on the arm assembly to lift the sliding element from the low position only to a position that is lower than the position where the sliding element is in contact with the overhead line.

3. A pantograph system as claimed in claims 1 or 2, wherein the arm assembly comprises a base assembly, a lower arm pivotally connected to the base assembly, and an upper arm pivotally connected to the lower arm, the auxiliary actuator being arranged to act on the lower arm.

4. A pantograph system as claimed in claim 3, wherein the auxiliary actuator is arranged to touch the lower arm when lifting the sliding element but arranged to separate from the lower arm when the primary actuator lifts the sliding element near to the position where the sliding element is in contact with the overhead line.

5. A pantograph system as claimed in any one of the preceding claims, wherein the auxiliary actuator is arranged to control the sliding element up and down for shaking the sliding element.

6. A pantograph system as claimed in any one of the preceding claims, wherein the auxiliary actuator is a pneumatic or a hydraulic actuator.

7. A pantograph system as claimed in any one of the preceding claims, wherein the system comprises an assembly to control the primary actuator to act on the arm assembly by a normal force in a normal force mode and, if needed, by a higher force in a higher force mode.

8. A pantograph system as claimed in claim 7, wherein the primary actuator is a pneumatic or a hydraulic actuator and in normal force mode the assembly to control the primary actuator is arranged to guide a lower pressure to the primary actuator and in higher force mode the assembly to control the primary actuator is arranged to guide a higher pressure to the primary actuator.

9. A pantograph system as claimed in claims 7 or 8, wherein the system comprises control means to control the vehicle to run in higher force mode at a speed that is lower than a maximum speed in the normal force mode.

10. A method for using a pantograph system, the pantograph system comprising a sliding element and an arm assembly arranged between an electric vehicle and the sliding element,
the method comprising
lifting the sliding element by a primary actuator from a low position of the sliding element to a position where the sliding element is in contact with an overhead line, and
when necessary, lifting the sliding element by an auxiliary actuator from the low position upwards.

11. A method as claimed in claim 10, comprising lifting the sliding element from the low position by the auxiliary actuator only to a position that is lower than the position where the sliding element is in contact with the overhead line.

12. A method as claimed in claims 10 or 11, comprising moving the sliding element by the auxiliary actuator up and down for shaking the sliding element.

13. A method as claimed in any one of the claims 10 to 12, comprising lifting the sliding element by the primary actuator using a normal force in a normal force mode and, if needed, using a higher force in a higher force mode.

14. A method as claimed in claim 13, wherein the primary actuator is a pneumatic or a hydraulic actuator and in normal force mode a lower pressure is guided to the primary actuator and in higher force mode a higher pressure is guided to the primary actuator.

15. A method as claimed in claims 13 or 14, wherein the vehicle is run in higher force mode at a speed that is lower than a maximum speed in the normal force mode.
